# EUROPEAN PATENT SPECIFICATION

(11) **EP 2 896 807 B1**
(45) Date of publication and mention of the grant of the patent: **14.06.2017**
(21) Application number: 15150546.8
(22) Date of filing: 08.01.2015
(51) Int. Cl.: F02C 6/12, F04D 17/10, F04D 29/42, F04D 29/44, F04D 29/68

(54) **Turbocharger with twin parallel compressor impellers and having center housing features for conditioning flow in the rear impeller**
Turbolader mit zwei parallelen Verdichterlaufrädern und mit zentralen Gehäusemerkmalen zum Konditionieren der Strömung im hinteren Laufrad
Turbocompresseur comprenant deux unités de roues de compresseur parallèles et présentant des caractéristiques de logement centrales pour conditionner le flux dans la roue arrière

(30) Priority: 15.01.2014 US 201414156172
(43) Date of publication of application: 22.07.2015
(62) Divisional of application: 15185126.8
(73) Proprietor: Honeywell International Inc., Morris Plains, NJ 07950 (US)
(72) Inventor: LEI, Vai-Man, Morristown, NJ New Jersey 07962-2245 (US); PLCH, Michal, Morristown, NJ New Jersey 07962-2245 (US); RACEK, Dusan, Morristown, NJ New Jersey 07962-2245 (US)
(74) Representative: Houghton, Mark Phillip

(56) References cited:
- EP-A2- 2 378 064
- EP-B1- 1 853 825
- WO-A1-2013/128539
- US-A1- 2007 113 551

## Description

### BACKGROUND OF THE INVENTION

The present invention relates to compressors for turbochargers, and more particularly to twin-impeller centrifugal (or radial) compressors and to turbochargers that include such compressors.

Radial compressors are used in various types of turbomachinery, including turbochargers for internal combustion engine systems. A radial compressor generally includes at least one compressor stage formed by a rotating impeller mounted on a shaft within a compressor housing. The housing defines an inlet flow path that typically leads into the impeller in a generally axial direction. The impeller includes a hub and a plurality of blades spaced about its circumference and extending out from the hub. The impeller is configured to receive fluid in the axial direction and to compress the fluid and discharge the fluid in a generally radially outward direction into a volute defined by the compressor housing. The housing includes a wall or shroud that extends proximate the tips of the impeller blades and, together with the hub of the impeller, defines the main flow path through the impeller.

Some compressor wheels have two impellers arranged back-to-back such that fluid enters one impeller in one axial direction and enters the other impeller in an opposite axial direction. It is a simple matter to supply air to the impeller on the outer end of the device (referred to herein as the "first" or "front" impeller), as the air comes in axially from outside the turbomachinery device (e.g., a turbocharger), via a suitable inlet conduit. The other impeller (referred to herein as the "second" or "rear" impeller), however, is typically up against other structure. For example, in a turbocharger, the rear impeller would typically be up against a bearing housing or center housing. Accordingly, air generally must be routed initially in a radially inward direction and then must be turned roughly 90 degrees to enter the rear impeller axially. Providing a reasonably uniform flow field into the rear impeller becomes a challenge. A uniform flow field is important to performance, particularly as regard the stall margin of the compressor. US2007/113151 and EP1853825 describe known turbochargers.

### BRIEF SUMMARY OF THE DISCLOSURE

The present disclosure deals generally with flow-conditioning into the rear impeller of a parallel twin-impeller compressor for a turbocharger, such as for improving stall margin of the compressor. More particularly, the present disclosure describes such flow-conditioning accomplished by structures that are defined at least in part, and in some cases wholly, by the center housing of the turbocharger. According to claim 1, a turbocharger comprises a turbine mounted on a rotatable shaft for rotation about an axis of the shaft, and a radial compressor comprising a compressor wheel mounted on the shaft and disposed within a compressor housing. The compressor wheel comprises a first impeller and a second impeller each having a hub and a plurality of compressor blades extending from the hub, a back side of the first impeller being adjacent a back side of the second impeller such that the impellers are in a back-to-back arrangement and air enters the impellers in oppositely directed axial directions. The compressor housing defines an inlet to the first impeller and defines a common volute that receives pressurized fluid from the first and second impellers via a common diffuser leading from the impellers into the volute. The compressor housing also defines a first shroud that is adjacent the tips of the blades of the first impeller.

The turbocharger includes a center housing mounted between the compressor housing and the turbine housing and containing bearings for the shaft. The center housing defines an inlet flow path for the second impeller. There is a second shroud that is adjacent the tips of the blades of the second impeller.

The turbocharger further includes a shroud ring mounted between the center housing and the compressor housing. The shroud ring defines at least part of the second shroud. The shroud ring further defines one wall of the common diffuser. The second shroud defines at least one bleed port therethrough and the center housing at least partially defines a bleed flow passage leading from the at least one bleed port into the inlet flow path for the second impeller at a position upstream of the at least one bleed port. Thus, fluid can pass in either direction between the inlet flow path and the second impeller via the at least one bleed port and the bleed flow passage. This "ported shroud" arrangement can be beneficial to stall margin. The at least one bleed port is formed by a generally annular space defined between the shroud ring and the center housing. The center housing, which houses the bearings and also defines the bleed flow passage is a one-piece integrally formed structure (as opposed to an assembly of separately formed parts one of which houses the bearings and another of which defines the bleed flow passage).

In one embodiment, the generally annular space also partially defines the bleed flow passage.

In one embodiment, the center housing defines a part of the bleed flow passage that leads from the generally annular space into the inlet flow path for the second impeller. In a particular embodiment this part of the bleed flow passage comprises an opening. For example, the opening can be an elongate circumferentially extending opening.

In another illustrative embodiment (not forming part of the invention) described herein, a turbocharger comprises a turbine mounted on a rotatable shaft for rotation about an axis of the shaft, and a radial compressor comprising a compressor wheel mounted on the shaft and disposed within a compressor housing, the compressor wheel comprising a first impeller and a second impeller each having a hub and a plurality of compressor blades extending from the hub, a back side of the first impeller being adjacent a back side of the second impeller such that the impellers are in a back-to-back arrangement and air enters the impellers in oppositely directed axial directions. The compressor housing defines an inlet to the first impeller and defines a common volute that receives pressurized fluid from the first and second impellers via a common diffuser leading from the impellers into the volute. The compressor housing defines a first shroud that is adjacent the tips of the blades of the first impeller, and there is a second shroud adjacent the tips of the blades of the second impeller.

The turbocharger includes a center housing mounted between the compressor housing and the turbine housing and containing bearings for the shaft, the center housing defining an inlet flow path for the second impeller.

The center housing defines inlet guide vanes disposed within the inlet flow path for the second impeller for conditioning flow into the second impeller.

In one illustrative embodiment (not forming part of the invention), the inlet flow path for the second impeller extends substantially 360 degrees about the axis, and the compressor housing defines an entrance passage into the inlet flow path for the second impeller, the entrance passage extending along a generally radial direction into the inlet flow path for the second impeller.

In a particular illustrative embodiment (not forming part of the invention), some of the inlet guide vanes have configuration differences relative to others of the inlet guide vanes. The configuration differences can include setting angle differences and/or differences in vane length along a direction of flow in the inlet flow path to the second impeller and/or differences in camber of the vanes.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a cross-sectional view of a turbocharger in accordance with one embodiment of the present invention;
FIG. 2 is a cross-sectional view of a portion of the turbocharger of FIG. 1;
FIG. 3 is a cross-sectional view of the portion shown in FIG. 2, but on a different plane from FIG. 2;
FIG. 4 is an exploded perspective view of an assembly including a center housing and a shroud ring as used in the turbocharger of FIG. 1;

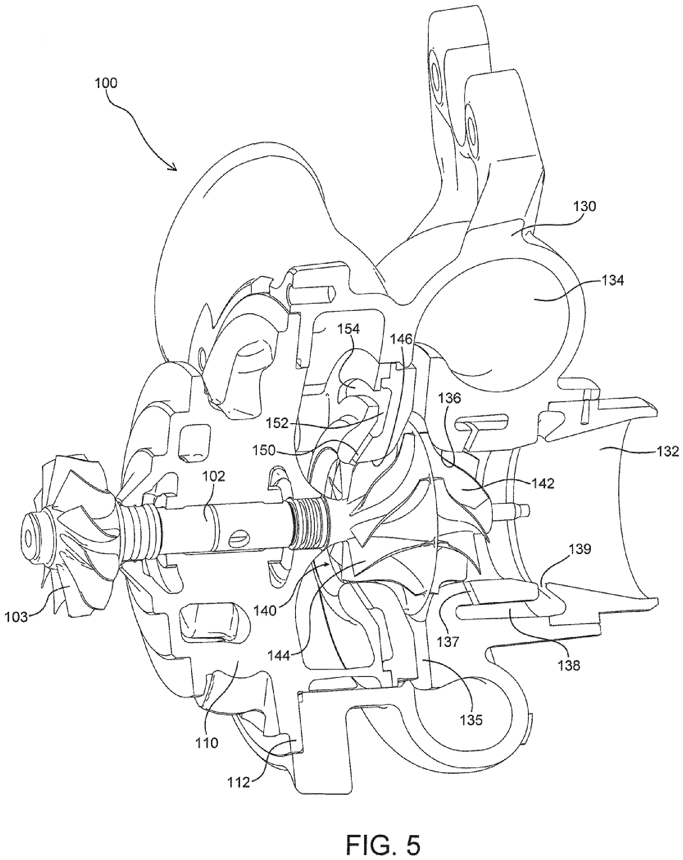

FIG. 5 is an axially sectioned perspective view of the turbocharger of FIG.1;
FIG. 6 is a perspective view, partly sectioned, of a turbocharger in accordance with another embodiment of the invention;
FIG. 7 is an axial cross-sectional view of the turbocharger of FIG. 6;
FIG. 8 is a perspective view of a center housing, partly sectioned, used in the turbocharger of FIG. 6;
FIG. 9 is a perspective view of the center housing of FIG. 8, sectioned to show details of the inlet guide vanes;
FIG. 10 is an end view of the sectioned center housing of FIG. 9; and
FIG. 11 is a perspective view of the center housing of FIG. 8.

### DETAILED DESCRIPTION OF THE DRAWINGS

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

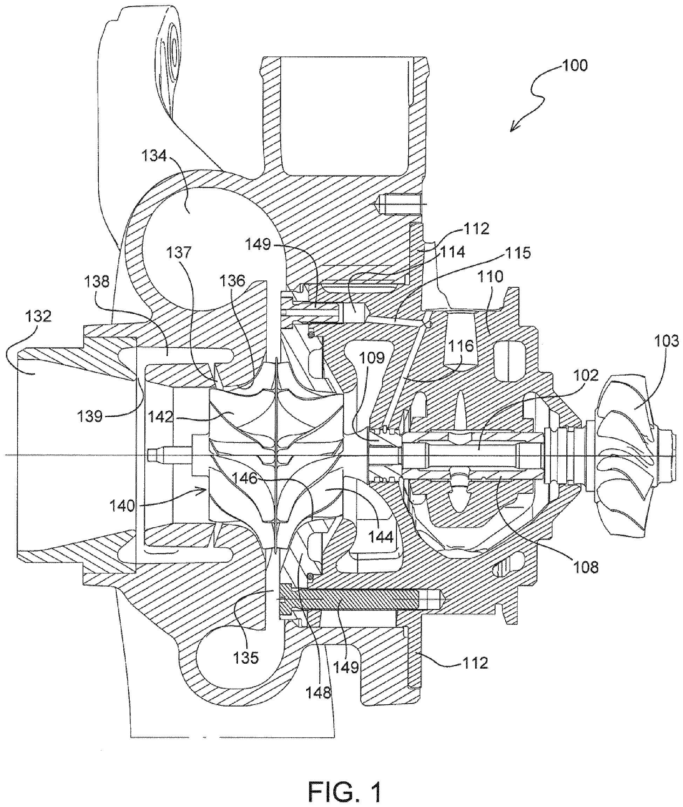

FIG. 1 shows a turbocharger **100** having a twin-impeller compressor, in accordance with one embodiment of the invention. The turbocharger **100** includes a rotary shaft **102** on one end of which a turbine wheel **103** is mounted. The turbine section of the turbocharger **100** includes a turbine housing (not shown) that defines a turbine volute arranged to direct fluid to the turbine wheel **103.** Exhaust gases from an engine (not shown) are fed into the turbine volute and the gases then pass through the turbine wheel **103** and are expanded so that the turbine wheel **103** is rotatably driven, thus rotatably driving the shaft **102.** The expanded gases are discharged from the turbine housing. The turbine can be a radial turbine in which the flow enters the turbine in a generally radially inward direction; however, the invention is not limited to any particular turbine arrangement. Furthermore, the turbocharger could include means other than a turbine for driving the shaft **102,** such as an electric motor.

The shaft **102** passes through a center housing **110** of the turbocharger. The center housing connects the turbine housing with a compressor housing **130** of the turbocharger as further described below. The center housing contains bearings **108** for the shaft **102.** The compressor housing **130** is affixed to the center housing **110** in suitable fashion, such as with threaded fasteners (not shown) or the like. Preferably the center housing is a one-piece integrally formed structure.

Mounted on an opposite end of the shaft **102** from the turbine wheel **103** is a compressor wheel **140** comprising a first impeller **142** and a second impeller **144.** Surrounding the compressor wheel is the compressor housing **130.** A forward portion of the compressor housing defines a compressor inlet **132** leading into the first impeller **142.**

The first impeller **142** and second impeller **144** are mounted back-to-back; that is, the downstream side of the first impeller **142** is nearer the turbine than is the upstream side of the impeller, while the downstream side of the second impeller **144** is farther from the turbine than is the upstream side of the impeller. Air enters the inlet **132** axially and goes straight into the first impeller **142.** With respect to the second impeller **144,** however, air must enter it in an opposite axial direction because of the back-to-back arrangement of the two impellers. Accordingly, as further described below, the air must be routed from outside the turbocharger in a generally radially inward direction toward the axis of the turbocharger, and then must be turned approximately 90 degrees to flow axially into the second impeller **144.** The arrangement for accomplishing this in an advantageous fashion is one of the key features of the present disclosure.

Before describing the second impeller in detail, however, the compressor housing **130** is described. A common scroll or volute **134** is defined by the compressor housing. Air pressurized by the two impellers **142, 144** is discharged from the impellers in a generally radially outward direction (although of course the flow has a significant circumferential or swirl component of velocity imparted by the compressor wheel) into a common diffuser **135,** and the air flows outward through the diffuser and is diffused (i.e., its velocity drops and its static pressure rises) and is discharged into the common volute **134.** The compressor housing defines a discharge conduit (not visible in FIG. 1) for discharging pressurized air from the volute **134** for supply to the intake of the internal combustion engine.

The compressor housing includes a first shroud **136** that extends circumferentially about the first impeller **142** closely adjacent to the tips of the blades of the impeller; the main flow path through the first impeller is defined between the first shroud and the hub of the impeller. The first shroud optionally can include flow recirculation features such as a bleed port **137** located adjacent the first impeller **142,** a recirculation flow passage **138,** and a bleed flow injection port **139** spaced upstream of the first impeller for allowing recirculation of flow for aiding stall margin of the compressor. In the illustrated embodiment, the inlet **132** to the first impeller is defined by a generally ring-shaped part that is separate from the rest of the compressor housing **130,** and the injection port **139** is defined between this ring-shaped part and the first shroud **136** defined by the compressor housing. Alternatively, however, the inlet **132** could be integral with the rest of the compressor housing.

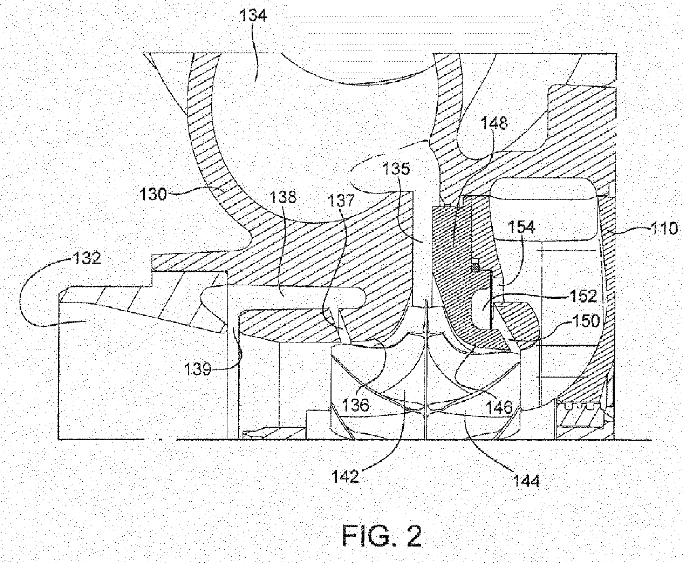

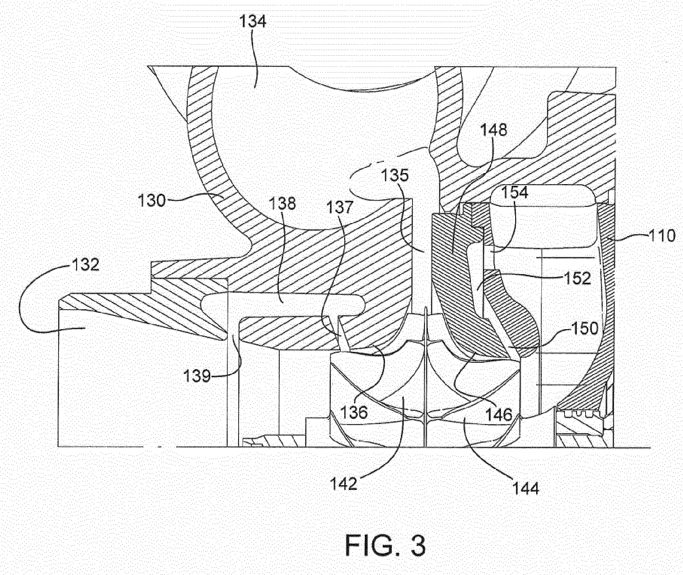

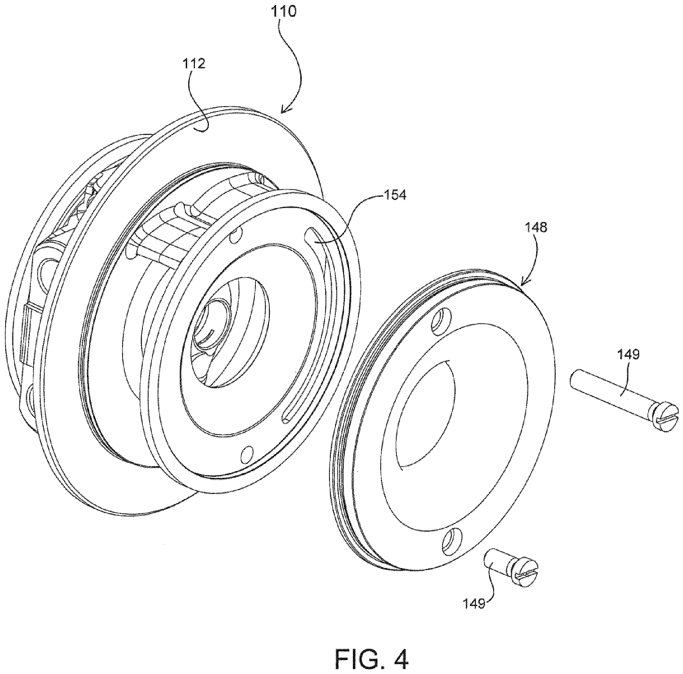

Turning now to the second impeller **144** and associate features, with primary reference to FIGS. 2 and 3, a second shroud **146** for the second impeller is defined at least in part by a shroud ring **148** that is separate from the compressor housing **130** and the center housing **110.** The shroud ring **148** is mounted between the center housing **110** and the compressor housing **130,** and is fastened to the center housing by fasteners **149** (FIGS. 1 and 4). In the illustrated embodiment, the shroud ring defines part of the second shroud **146** and the center housing **110** defines the remainder of the second shroud. The common diffuser **135** is formed between a wall of the compressor housing **130** and a wall of the shroud ring **148.** It will also be noted from FIG. 1 that the compressor housing **130** defines a space or receptacle into which a partial assembly (comprising the shaft **102** and compressor wheel **140,** the shroud ring **148,** and the center housing **110**) is received, in a right-to-left direction in FIG. 1, until an outer flange portion **112** of the center housing abuts an annular surface defined by the compressor housing. The abutment of the flange portion **112** with the annular surface on the compressor housing ensures that the shroud ring **148** is properly located in an axial sense with respect to the compressor housing (so that, for example, the compressor wheel **140** has the correct axial position with respect to the first shroud **136** and so that the diffuser **135** has the intended axial width dimension). Additionally, the annular surface abutted by the center housing flange portion **112** is surrounded by a step that locates the flange portion **112** properly in a radial sense (so that, for example, the compressor wheel **140** has the correct radial position with respect to the first shroud **136**).

In accordance with this embodiment of the invention, the second shroud **146** defines at least one bleed port **150** therethrough and the center housing **110** at least partially defines a bleed flow passage **152** leading from the at least one bleed port into the inlet flow path for the second impeller **144** at a position upstream of the at least one bleed port **150** such that fluid can pass in either direction between the inlet flow path and the second impeller via the at least one bleed port **150** and the bleed flow passage **152.**

In the illustrated embodiment, the at least one bleed port **150** is formed by a generally annular space defined between the shroud ring **148** and the center housing **110.** This generally annular space partially defines the bleed flow passage **152.** Additionally, the center housing defines a part of the bleed flow passage **152** that leads from the generally annular space into the inlet flow path for the second impeller. More particularly, this part of the bleed flow passage comprises an opening **154** defined in the center housing **110.** The opening **154** in the illustrated embodiment is an elongate circumferentially extending opening, as best seen in FIG. 4.

The upstream portion of an impeller that the fluid first encounters is often referred to as the inducer of the impeller. When the flow rate through the compressor is reduced while maintaining pressure ratio at a relatively high level, at some point the surge line of the compressor map is encountered. Surging at relatively high pressure ratios typically occurs because of stalling of the inducer of one or both impellers, wherein the flow at the blade tips of the inducer begins locally to recirculate, thereby reducing the effective flow area of the inducer. In contrast, below a certain pressure ratio, surging typically is the result of stalling of the diffuser. The surge line of many compressors has a kink or "knee" above which surging is caused by inducer stall, and below which surging is caused by diffuser stall.

The current embodiment of the present invention particularly addresses surging above the knee caused by inducer stall. In accordance with the invention, the ported second shroud **146** is employed in order to delay the onset of inducer stall of the second impeller **144** to higher pressure ratios at flow (or, stated differently, to lower flows at pressure ratio). Thus, fluid entering the inducer of the second impeller **144** near the blade tips potentially can enter the bleed port **150** and flow generally radially outwardly through the bleed flow passage **152** and exit through the opening **154** into the inlet flow path for the second impeller. Fluid can also pass in the reverse direction from the inlet flow path through the opening **154** into the bleed flow passage **152** and through the port **150** into the inducer of the second impeller. The direction of flow depends on the sense of the pressure gradient between the inducer location and the upstream inlet flow path location.

At higher pressure ratios, where inducer stall of the second impeller **144** would ordinarily begin to occur, the ported second shroud (in comparison with an otherwise identical non-ported shroud) can delay the onset of surge. It is believed that at near-surge conditions the ported shroud allows fluid to pass into the bleed flow passage **152** and through the opening **154** back into the inlet flow path, and thereby prevents or reduces the local flow recirculation in the inducer tip region that normally attends inducer stall and surge.

As previously described in connection with FIG. 1, the compressor in accordance with the current embodiment of the invention can also include a ported first shroud **136.** Alternatively, the compressor can have a non-ported first shroud.

Referring to FIG. 1, one of the fasteners **149** for the shroud ring **148** has a through bore that communicates with the hole **114** in the shroud ring into which the fastener is received. The center housing **110** additionally defines a passage **115** that communicates with the hole **114,** and a passage **116** that communicates with the passage **115** and extends into the bore of the center housing in which a seal **109** for the rotor shaft **102** is located. In this manner, pressurized air from the diffuser **135** is communicated via the hole **114** and the passages **115, 116** to the seal **109** for pressurizing the seal.

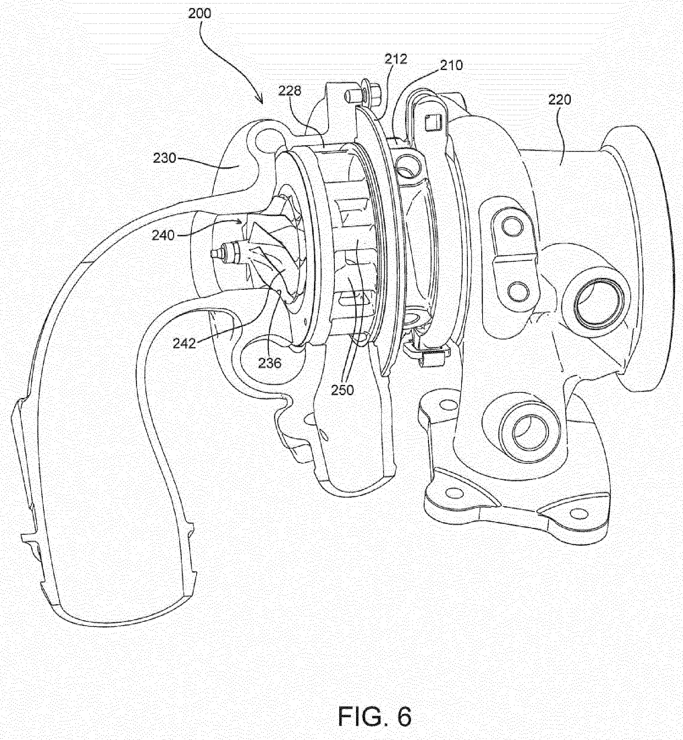

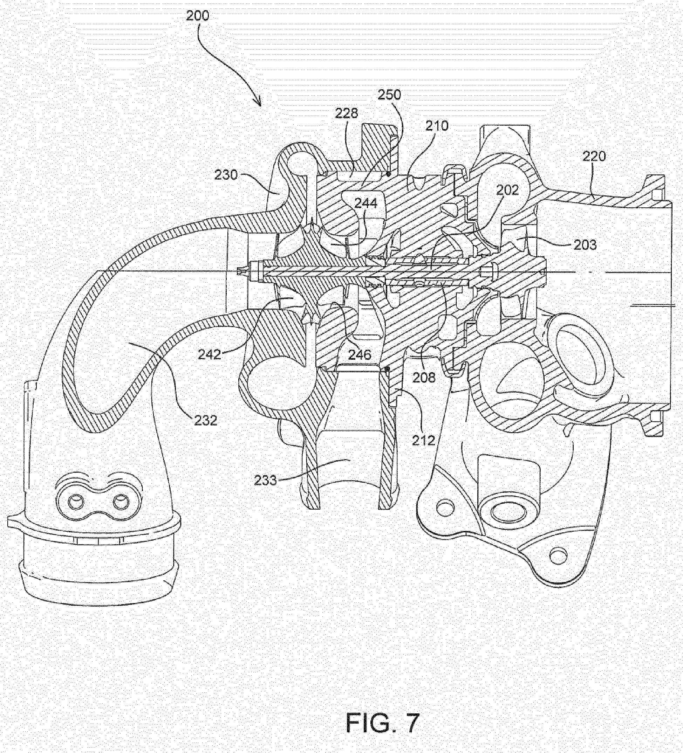

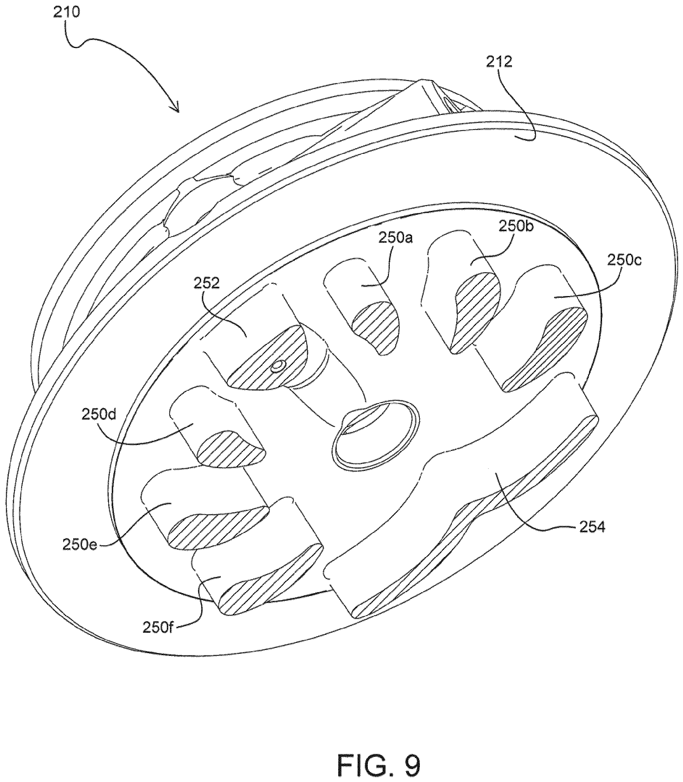

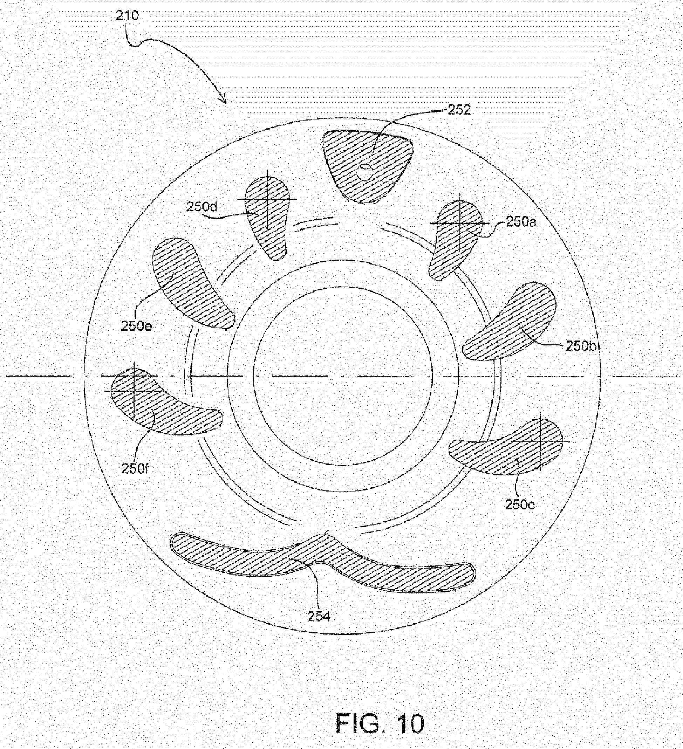

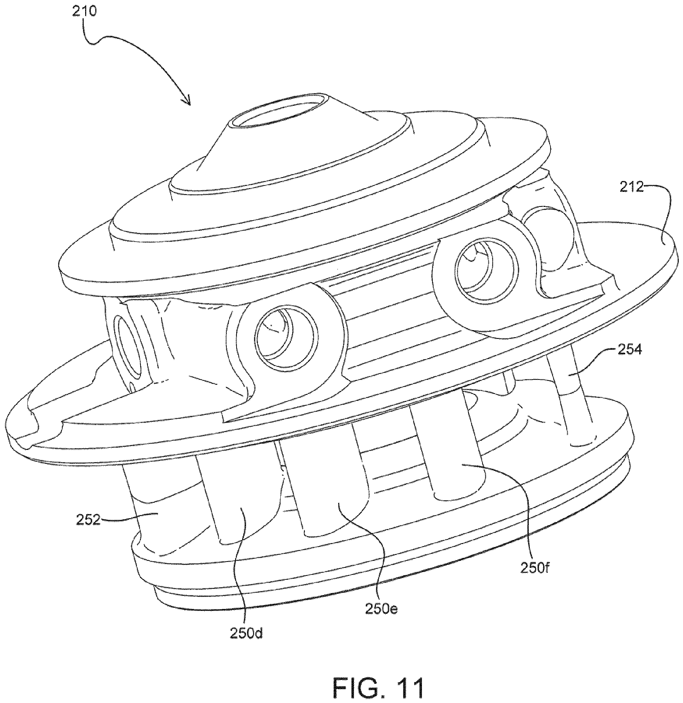

A second illustrative embodiment (not forming part of the invention) is illustrated in FIGS. 6 through 11. The turbocharger **200** depicted in FIGS. 6 and 7 is similar in many respects to the turbocharger **100** described above, differing primarily in terms of the structure and arrangement of the center housing **210** and compressor housing **230.** The turbocharger **200** includes a turbine wheel **203** mounted on one end of a shaft **202,** and a compressor wheel **240** mounted on the other end of the shaft **202.** The shaft is supported in bearings **208** mounted within the center housing **210.** The turbine wheel **203** is contained within a turbine housing **220,** which is affixed to the center housing **210** such as by the illustrated V-band shown in FIG. 7. The compressor wheel **240** is contained with the compressor housing **230.** The compressor wheel is a twin-impeller wheel having a first impeller **242** and a second impeller **244** mounted back-to-back. Flow enters the first impeller **242** via a first inlet conduit **232,** which leads the flow axially into the first impeller. Flow enters the second impeller **244** via a second inlet conduit **233,** which leads the flow radially inwardly into an annular space **228** that surrounds a portion of the center housing **110.** This portion of the center housing defines the inlet flow path for the second impeller **244.** The fluid is distributed around the annular space **228** and flows generally radially inwardly through the inlet flow path and is then turned approximately 90 degrees to enter the second impeller **244** in a generally axial direction.

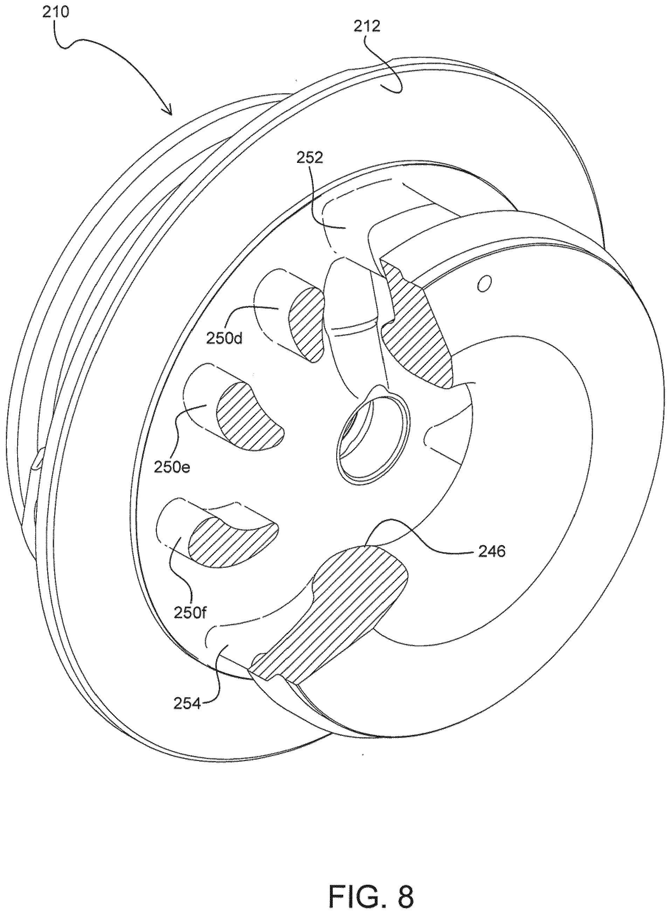

In accordance with the second illustrative embodiment (not forming part of the invention), and with primary reference to FIGS. 8-11, the center housing **210** is an integral one-piece structure that includes a portion defining a second shroud **246** for the second impeller **244** and also defining one wall of a common diffuser **235** (FIG. 7) for the compressor wheel. The center housing **210** also defines inlet guide vanes **250** in the inlet flow path for the second impeller **244.** Flow entering through the inlet conduit **233** (FIG. 7) first encounters a wedge-shaped member **252,** which splits the flow into two portions, one of which proceeds generally clockwise through the annular space **228** and the other of which proceeds generally counterclockwise through the annular space **228,** whereupon these two flows encounter the inlet guide vanes **250.** Referring particularly to FIG. 8, the clockwise flow encounters inlet guide vanes **250a, 250b,** and **250c.** In the illustrated embodiment, these inlet guide vanes are not identical in configuration. Specifically, the inlet guide vanes **250a-250c** differ in setting angle with respect to the radial direction and also differ in length in the flow direction as well as the amount of camber of the vanes. The inlet guide vanes **250d-250f** for the counterclockwise flow portion are arranged in mirror image to the inlet guide vanes **250a-250c.** Diametrically opposite from the wedge-shaped member **252** is a bird wing-shaped member **254** that also serves to help guide the flow into the second impeller. Detailed flow studies, such as CFD (computational fluid dynamics), can be used for tailoring the configurations of the inlet guide vanes **250** and the members **252** and **254.**

It will be noted from FIG. 7 (illustrative embodiment not forming part of the invention) that the compressor housing **230** defines a space or receptacle into which a partial assembly (comprising the shaft **202** and compressor wheel **240,** and the center housing **210**) is received, in a right-to-left direction in FIG. 7, until an outer flange portion **212** of the center housing abuts an annular surface defined by the compressor housing. The abutment of the flange portion **212** with the annular surface on the compressor housing ensures that the portion of the center housing defining the second shroud **246** is properly located in an axial sense with respect to the compressor housing (and so that, for example, the compressor wheel **240** has the correct axial position with respect to the first shroud **236** and so that the diffuser **235** has the intended axial width dimension). Additionally, the annular surface abutted by the center housing flange portion **212** is surrounded by a step that locates the flange portion **212** properly in a radial sense (so that, for example, the compressor wheel **240** has the correct radial position with respect to the first shroud **236**).

The inlet guide vanes **250** of the second illustrative embodiment (not forming part of the invention) are configured to condition the flow that enters the second impeller **244.** In particular, the inlet guide vanes are configured to alter or regulate the direction of the flow in order to improve the uniformity of the flow around the circumference. More-uniform flow generally leads to greater stability of the compressor and improved surge margin.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included if within the scope of the appended claims. Although specific terms are employed herein, they are used in a generic and descriptive sense only and not for purposes of limitation.

## Claims

1. A turbocharger (100), comprising:
a turbine (103) mounted on a rotatable shaft (102) for rotation about an axis of the shaft;
a radial compressor comprising a compressor wheel (140) mounted on the shaft (102) and disposed within a compressor housing (130), the compressor wheel (140) comprising a first impeller (142) and a second impeller (144) each having a hub and a plurality of compressor blades extending from the hub, a back side of the first impeller (142) being adjacent a back side of the second impeller (144) such that the impellers are in a back-to-back arrangement and air enters the impellers in oppositely directed axial directions, the compressor housing (130) defining an inlet (132) to the first impeller (142) and defining a common volute (134) that receives pressurized fluid from the first (142) and second (144) impellers via a common diffuser (135) leading from the respective impellers into the volute (134), the compressor housing (130) defining a first shroud (136) that is adjacent tips of the blades of the first impeller (142), and wherein a second shroud (146) is adjacent tips of the blades of the second impeller (144);
a center housing (110) mounted between the compressor housing (130) and the turbine housing and containing bearings (108) for the shaft (102), the center housing (110) defining an inlet flow path for the second impeller (144);
a shroud ring (148) mounted between the center housing (110) and the compressor housing (130), wherein the shroud ring (148) defines part of the second shroud (146) and the center housing (110) defines the remainder of the second shroud (146), the shroud ring (148) further defining one wall of the common diffuser (135);
wherein the second shroud (146) defines at least one bleed port (150) therethrough and the center housing (110) at least partially defines a bleed flow passage (152) leading from said at least one bleed port (150) into the inlet flow path for the second impeller (144) at a position upstream of said at least one bleed port (150) such that fluid can pass in either direction between the inlet flow path and the second impeller (144) via said at least one bleed port (150) and said bleed flow passage (152), wherein said at least one bleed port (150) is formed by a generally annular space defined between the shroud ring (148) and the center housing (110) and wherein the center housing (110) is a one-piece integrally formed structure.

2. The turbocharger of claim 1, wherein said generally annular space partially defines said bleed flow passage (152).

3. The turbocharger of claim 2, wherein the center housing (110) defines a part of said bleed flow passage (152) that leads from said generally annular space into the inlet flow path for the second impeller (144).

4. The turbocharger of claim 3, wherein said part of said bleed flow passage (152) comprises an opening (154).

5. The turbocharger of claim 4, wherein said opening (154) is an elongate circumferentially extending opening.

## Patentansprüche

1. Turbolader (100), umfassend:
eine Turbine (103), die auf einer drehbaren Welle (102) zur Drehung um eine Achse der Welle angebracht ist;
einen Radialverdichter, der ein auf der Welle (102) angebrachtes und in einem Verdichtergehäuse (130) angeordnetes Verdichterrad (140) umfasst, wobei das Verdichterrad (140) ein erstes Laufrad (142) und ein zweites Laufrad (144) umfasst, die jeweils eine Nabe und mehrere sich von der Nabe erstreckende Verdichterschaufeln aufweisen, wobei sich eine Rückseite des ersten Laufrads (142) neben einer Rückseite des zweiten Laufrads (144) befindet, so dass sich die Laufräder in einer Rücken an Rücken liegenden Anordnung befinden und Luft in entgegengesetzt gerichteten Axialrichtungen in die Laufräder eintritt, wobei das Verdichtergehäuse (130) einen Einlass (132) zu dem ersten Laufrad (142) definiert und eine gemeinsame Spirale (134) definiert, die mit Druck beaufschlagtes Fluid von dem ersten (142) und dem zweiten (144) Laufrad über einen gemeinsamen Diffusor (135) empfängt, der von den jeweiligen Laufrädern in die Spirale (134) führt, wobei das Verdichtergehäuse (130) ein erstes Deckband (136) definiert, das sich neben Spitzen der Schaufeln des ersten Laufrads (142) befindet, und wobei sich ein zweites Deckband (146) neben Spitzen der Schaufeln des zweiten Laufrads (144) befindet;
ein zentrales Gehäuse (110), das zwischen dem Verdichtergehäuse (130) und dem Turbinengehäuse angebracht ist und Lager (108) für die Welle (102) enthält, wobei das zentrale Gehäuse (110) einen Einlassströmungspfad für das zweite Laufrad (144) definiert;
einen Deckbandring (148), der zwischen dem zentralen Gehäuse (110) und dem Verdichtergehäuse (130) angebracht ist, wobei der Deckbandring (148) Teil des zweiten Deckbands (146) definiert und das zentrale Gehäuse (110) den Rest des zweiten Deckbands (146) definiert, wobei der Deckbandring (148) ferner eine Wand des gemeinsamen Diffusors (135) definiert;
wobei das zweite Deckband (146) mindestens eine Entlüftungsöffnung (150) dort hindurch definiert und das zentrale Gehäuse (110) mindestens teilweise einen Entlüftungsströmungskanal (152) definiert, der von der mindestens einen Entlüftungsöffnung (150) in den Einlassströmungspfad für das zweite Laufrad (144) an einer stromaufwärts der mindestens einen Entlüftungsöffnung (150) liegenden Stelle führt, so dass Fluid über die mindestens eine Entlüftungsöffnung (150) und den Entlüftungsströmungskanal (152) in beiden Richtungen zwischen dem Einlassströmungspfad und dem zweiten Laufrad (144) passieren kann, wobei die mindestens eine Entlüftungsöffnung (150) durch einen zwischen dem Deckbandring (148) und dem zentralen Gehäuse (110) definierten allgemein ringförmigen Raum gebildet wird und wobei das zentrale Gehäuse (110) eine einstückige, integral ausgebildete Struktur ist.

2. Turbolader nach Anspruch 1, wobei der allgemein ringförmige Raum den Entlüftungsströmungskanal (152) teilweise definiert.

3. Turbolader nach Anspruch 2, wobei das zentrale Gehäuse (110) einen Teil des Entlüftungsströmungskanals (152) definiert, der von dem allgemein ringförmigen Raum in den Einlassströmungspfad für das zweite Laufrad (144) führt.

4. Turbolader nach Anspruch 3, wobei der Teil des Entlüftungsströmungskanals (152) einen Durchlass (154) umfasst.

5. Turbolader nach Anspruch 4, wobei der Durchlass (154) ein langgestreckter um den Umfang verlaufender Durchlass ist.

## Revendications

1. Turbocompresseur (100), comprenant :
une turbine (103) montée sur un arbre rotatif (102) en vue d'une rotation autour d'un axe de l'arbre ;
un compresseur radial comprenant une roue de compresseur (140) montée sur l'arbre (102) et disposée à l'intérieur d'un boîtier de compresseur (130), la roue de compresseur (140) comprenant un premier rotor (142) et un deuxième rotor (144) ayant chacun un moyeu et une pluralité de pales de compresseur s'étendant à partir du moyeu, un côté arrière du premier rotor (142) étant adjacent à un côté arrière du deuxième rotor (144) de telle sorte que les rotors soient disposés dos à dos et que de l'air pénètre à travers les rotors dans des directions radiales opposées, le boîtier de compresseur (130) définissant une entrée (132) dans le premier rotor (142) et définissant une volute commune (134) qui reçoit du fluide sous pression provenant du premier (142) et du deuxième (144) rotor par le biais d'un diffuseur commun (135) conduisant depuis les rotors respectifs jusque dans la volute (134), le boîtier de compresseur (130) définissant une première enveloppe (136) qui est adjacente à des pointes des pales du premier rotor (142), et une deuxième enveloppe (146) étant adjacente à des pointes des pales du deuxième rotor (144) ;
un boîtier central (110) monté entre le boîtier de compresseur (130) et le boîtier de turbine et contenant des paliers (108) pour l'arbre (102), le boîtier central (110) définissant un chemin d'écoulement d'entrée pour le deuxième rotor (144) ;
une virole (148) montée entre le boîtier central (110) et le boîtier de compresseur (130), la virole (148) définissant une partie de la deuxième enveloppe (146) et le boîtier central (110) définissant le reste de la deuxième enveloppe (146), la virole (148) définissant en outre une paroi du diffuseur commun (135) ;
la deuxième enveloppe (146) définissant au moins un orifice de purge (150) à travers elle et le boîtier central (110) définissant au moins en partie un passage d'écoulement de purge (152) conduisant depuis ledit au moins un orifice de purge (150) jusque dans le chemin d'écoulement d'entrée pour le deuxième rotor (144) dans une position en amont dudit au moins un orifice de purge (150) de telle sorte que du fluide puisse passer dans l'une ou l'autre direction entre le chemin d'écoulement d'entrée et le deuxième rotor (144) par le biais dudit au moins un orifice de purge (150) et dudit passage d'écoulement de purge (152), ledit au moins un orifice de purge (150) étant formé par un espace généralement annulaire défini entre la virole (148) et le boîtier central (110) et le boîtier central (110) étant une structure formée de manière intégrale d'une seule pièce.

2. Turbocompresseur selon la revendication 1, dans lequel ledit espace généralement annulaire définit en partie ledit passage d'écoulement de purge (152).

3. Turbocompresseur selon la revendication 2, dans lequel le boîtier central (110) définit une partie dudit passage d'écoulement de purge (152) qui conduit depuis ledit espace généralement annulaire jusque dans le chemin d'écoulement d'entrée pour le deuxième rotor (144).

4. Turbocompresseur selon la revendication 3, dans lequel ladite partie dudit passage d'écoulement de purge (152) comprend une ouverture (154).

5. Turbocompresseur selon la revendication 4, dans lequel ladite ouverture (154) est une ouverture s'étendant circonférentiellement sous forme allongée.
